(19) Europäisches Patentamt
European Patent Office
Office européen des brevets

(11) **EP 2 254 085 A1**

(12) **EUROPÄISCHE PATENTANMELDUNG**
veröffentlicht nach Art. 153 Abs. 4 EPÜ

(43) Veröffentlichungstag:
**24.11.2010 Patentblatt 2010/47**

(51) Int Cl.:
*G06Q 30/00* (2006.01)      *G06Q 40/00* (2006.01)

(21) Anmeldenummer: **08873337.3**

(22) Anmeldetag: **14.03.2008**

(86) Internationale Anmeldenummer:
**PCT/RU2008/000144**

(87) Internationale Veröffentlichungsnummer:
**WO 2009/113901 (17.09.2009 Gazette 2009/38)**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Glenic Industrial S.A.**
**1724 Luxembourg (LU)**

(72) Erfinder: **SHMAKOV, Andrey Vyacheslavovich**
**Moscow 111020 (RU)**

(74) Vertreter: **Kietzmann, Manfred**
**Kietzmann, Vosseberg, Röhnicke,**
**Patentanwälte-Rechtsanwalt-Partnerschaft,**
**Friedrichstrasse 95**
**IHZ P.O. Box 4**
**10117 Berlin (DE)**

(54) **AKTIENWECHSELSYSTEM ZUR AUSHANDLUNG VON ANTEILEN VON ANTEILSINVESTMENTFONDS**

(57) Die Erfindung betrifft Systeme und Verfahren zur Berechnung und Verarbeitung von Daten bei Börsengeschäften mit Anteilsscheinen von Investmentfonds. System, das eine Prozessoreinheit, die über Leitungen mit der Text- und Grafikanzeigeeinheit und der Dateneingabeeinrichtung verbunden ist. Das System umfasst zusätzlich eine Datenbank über die Anzahl der Anteilsscheine, aus denen jeder am Börsenhandel beteiligte Anteilsfonds besteht, eine Datenbank über die Restbestände auf den Verrechnungskonten, eine Datenbank über Restbestände an Geldmitteln auf den Handelskonten und eine Datenbank über die Anzahl der Wertpapiere, aus denen das Vermögen eines jeden genannten Fonds besteht. Die Prozessoreinheit ist über eine Eingabeeinrichtung mit den genannten Datenbanken verbunden und umfasst eine Einheit zur Ermittlung des Wertes eines Anteilsscheins, die mit einer Einheit zur Anzeige des zahlenmäßigen Äquivalents dieses Anteilsscheins für jeden Anteilsfonds verbunden ist. Die Einheit zur Ermittlung des Wertes eines Anteilsscheins in Echtzeit in Form des Preisindexes des Anteilsscheins umfasst eine Einheit, die die Ergebnisse der Multiplikation der Anzahl der zum Fondsvermögen gehörenden Wertpapiere addiert, eine Einheit, die die Summe aus den Ergebnissen der Multiplikation der Anzahl der zum Fondsvermögen gehörenden Wertpapiere durch den Verrechnungspreis dieses Papiere dividiert und eine Einheit, die die Restbestände an Geldmitteln auf den Handels- und Verrechnungskonten des jeweiligen Investmentfonds durch die Anzahl der Anteilsscheine dieses Fonds dividiert.

**EP 2 254 085 A1**

**Beschreibung**

Die Erfindung betrifft Systeme und Verfahren zur Ermittlung und Verarbeitung von Daten, die besonders für bestimmte Kredit- und Finanztransaktionen in Form des Umlaufs von Anteilsscheinen als Wertpapieräquivalent, z. B. als zweckgebundene Schuldverschreibungen beim Verkauf von Waren und der Erbringung von Leistungen, bestimmt sind.

Bekannt ist ein System zur Kontrolle und Demonstration von Ergebnissen des Kaufs/Verkaufs von Anteilsscheinen von Investmentfonds an der Börse. Dieses System umfasst eine Prozessoreinheit mit der entsprechenden Software, die über Leitungen mit einer Text- und Grafikanzeigeeinheit und einer Dateneingabeeinrichtung verbunden ist (RU Nr. 2187149, G06F17/60, veröffentlicht am 10.08.2002).

Der Nachteil dieses Systems, das als Instrument bei Geschäften mit Anteilsscheinen an der Wertpapierbörse eingesetzt wird, besteht darin, dass ein hinsichtlich Informationsgehalt und Aussagefähigkeit unzureichend effektives Verfahren zur Ermittlung des Wertes des Anteilsscheins verwendet wird. Die Angaben zur Anzahl der zu den Vermögenswerten des Anteilsfonds gehörenden Wertpapiere werden aus einem Clearingzentrum bezogen, als das eine Depot- und Clearinggesellschaft fungiert. Die Daten über die Restbestände an Geldmitteln auf den Handelskonten gehen vom Clearinghaus (Liquidationskasse) ein, die Angaben über die Preise der letzten Geschäfte von den Handelsservern der Wertpapierbörse.

Die Daten über die Anzahl der Anteilsscheine und die Restbestände auf den Verrechnungskonten des Investmentfonds werden von der Fondsverwaltungsgesellschaft anhand der Daten aufbereitet, die von den Banken, bei denen die Verrechnungskonten geführt werden, sowie von der speziellen Depotstelle, die die Änderungen der Anzahl der Anteilsscheine bei deren Kauf bzw. Rückzahlung durch die Anteilseigner erfasst, bereitgestellt werden. Diese Angaben werden einmal pro Tag vor Börsenbeginn der Wertpapierbörse übermittelt und bleiben während des Börsentages unverändert.

Die Fondsverwaltungsgesellschaften sind verpflichtet, die Anteilsscheine von den Anteilseignern nur zu dem Preis zu kaufen und zurückzuzahlen, der nach einem Verfahren berechnet wurde, wonach der Wert des Anteilsscheins folgendermaßen ermittelt wird: Der Anfangsrestbestand an Wertpapieren zu Beginn des Tages wird mit dem gewogenen Durchschnittspreis anhand der Tagesergebnisse multipliziert. Anschließend wird die Summe aller Vermögenswerte durch die Anzahl der Anteilsscheine dividiert. Demzufolge könnten Geschäfte mit Anteilsscheinen über die Fondsverwaltungsgesellschaften nur zu den Preisen des gestrigen Tages abgewickelt werden, die allerdings heute von der Realität sehr weit entfernt sein können.

Zum jetzigen Zeitpunkt ist das entscheidende Hemmnis, das den aktiven Börsenhandel mit Anteilfonds behindert, darin zu sehen, dass es keine zuverlässigen und operativen Angaben über den Wert des auf einen jeden Anteilsschein entfallenden Vermögens des Anteilsfonds gibt. Nur wenn diese Angaben vorliegen, könnten professionelle Marktteilnehmer die bilateralen Kursnotierungen der Investmentanteilsscheine stützen und die Investoren Geschäfte mit den Anteilfonds an der Börse tätigen. Die Portfoliostruktur des Anteilfonds und die Transaktionen mit dessen Vermögenswerten sind ja unzugängliche Informationen. Aus diesem Grund können die übrigen Marktteilnehmer nicht feststellen, was mit dem Wert des Anteilsscheins bei steigender oder fallender Kursnotierung der verschiedenen Aktien passiert.

Offensichtlich kann ein Anteilseigner bei den geltenden normativen Dokumenten der Regulierungsbehörden einen ungerechtfertigten Gewinn oder Verlust gegenüber anderen Anteilseignern beim Kauf oder Verkauf der Anteile über eine Fondsverwaltungsgesellschaft erzielen, da der Preis nach dem o. g. Verfahren ermittelt wird. Daraus erklären sich auch die bestehenden großen Aufschläge beim Kauf von Anteilsscheinen und die Nachlässe bei deren Verkauf, damit die Personen, die über Insiderinformationen über den realen Wert des Anteilsscheins verfügen, keinen ungerechtfertigten Vorteil erzielen können. Zudem lässt es das Procedere beim Kauf und der Rückzahlung von Anteilsscheinen nicht zu, dass die Anteilseigner aktive Transaktionen mit Anteilsscheinen tätigen. Laut Gesetz kann die Fondsverwaltungsgesellschaft den Rückzahlungspreis für einen Anteilsschein innerhalb von drei Tagen nach dem Auftrag zur Rückzahlung bestimmen und danach mit der Rückzahlung des Geldes bis zu 15 Tagen warten.

Transaktionen mit Investmentanteilsscheinen über die Börse sind dazu angetan, die Attraktivität der Institution der Investmentfonds grundlegend zu verbessern. Alles, was dazu benötigt wird, ist, den Wert des Vermögens, das auf einen Anteilsschein entfällt, in Echtzeit zu bestimmen. Besteht das Vermögen des Anteilsfonds nur aus Börsenfinanzinstrumenten, kann sein Wert jederzeit anhand der Preise der letzten Börsengeschäfte bestimmt werden. Da sich jedoch im Laufe eines Tages die Anzahl der Anteilsscheine nicht ändert, ist der Wert des Vermögens des Anteilsfonds, das auf einen Anteilsschein entfällt, einfach zu ermitteln.

Die Erfindung zielt darauf ab, die technische Aufgabe zur Eingabe des entsprechenden Algorithmus in das Kontroll- und Anzeigesystem für die Ergebnisse des Börsenhandels zu lösen, um den Wert des Vermögens, das auf einen Anteilsschein entfällt, in Echtzeit zu ermitteln.

Das dabei zu erzielende technische Ergebnis besteht in einem höheren Informationsgehalt und einer besseren Aussagekraft der Handelsergebnisse durch Anzeige des realen Anteilswertes ausgehend von den Ergebnissen eines jeden Geschäfts.

Das genannte technische Ergebnis wird dadurch erzielt, dass das System des Börsenhandels mit Anteilsscheinen von Investmentfonds, das eine Prozessoreinheit umfasst, die über Leitungen mit der Text- und Grafikanzeigeeinheit und der Dateneingabeeinrichtung verbunden ist, zusätzlich eine Datenbank über die Anzahl der Anteilsscheine, aus denen jeder am Börsenhandel beteiligte Investmentfonds besteht, weiterhin eine Datenbank über die Restbestände auf den Verrechnungskonten, eine Datenbank über die Restbestände an Geldmitteln auf den Handelskonten und eine Datenbank über die Anzahl der Wertpapiere, aus denen das Vermögen eines jeden genannten Fonds besteht, umfasst. Die Prozessoreinheit ist über die Eingabeeinrichtung mit den genannten Datenbanken verbunden und umfasst eine Einheit zur Ermittlung des Wertes eines Anteilsscheins, die mit einer Einheit zur Anzeige des zahlenmäßigen Äquivalents für den Wert dieses Anteilsscheins für jeden Anteilsfonds auf dem Display oder in der Laufschrift verbunden ist. Dabei umfasst die Einheit zur Ermittlung des Anteilswertes in Echtzeit in Form des Preisindexes des Anteils eine Einheit, die die Anzahl der zum Vermögen des Fonds gehörenden Wertpapiere mit dem Verrechnungspreis dieser Wertpapiere multipliziert, eine Einheit, die das erzielte Ergebnis der Multiplikation der Anzahl der zum Fondsvermögen gehörenden Wertpapiere mit dem Verrechnungspreis dieser Wertpapiere durch die Anzahl der Fondsanteilsscheine dividiert, Einheiten, die die Restbestände auf den Handels- und Verrechnungskonten des entsprechenden Anteilsfonds durch die Anzahl der Anteile dieses Fonds dividieren, sowie eine Einheit, die die Ergebnisse der Division addiert und mit einer Funktion zur Ermittlung des Wertes eines Anteilsscheins als Preisindex des Anteilsscheins in Echtzeit versehen ist. Der Wert wird durch Division der Summe aus den Ergebnissen der Multiplikation der Anzahl der zum Vermögen des Fonds gehörenden Wertpapiere mit dem Verrechnungspreis dieser Wertpapiere und aus den Restbeständen an Geldmitteln auf den Handels- und Verrechnungskonten des jeweiligen Anteilsfonds durch die Anzahl der Anteile dieses Fonds gebildet.

Die genannten Merkmale sind wesentlich und untereinander mit der Bildung einer stabilen Menge wesentlicher Merkmale wechselbezogen. Diese Gesamtheit ist ausreichend, um das genannte technische Ergebnis zu erzielen.

Die vorliegende Erfindung wird an einem konkreten Beispiel erläutert, das allerdings nicht das einzig mögliche ist, jedoch anschaulich demonstriert, wie durch die erwähnte Gesamtheit der Merkmale das beanspruchte technische Ergebnis erzielt werden kann.

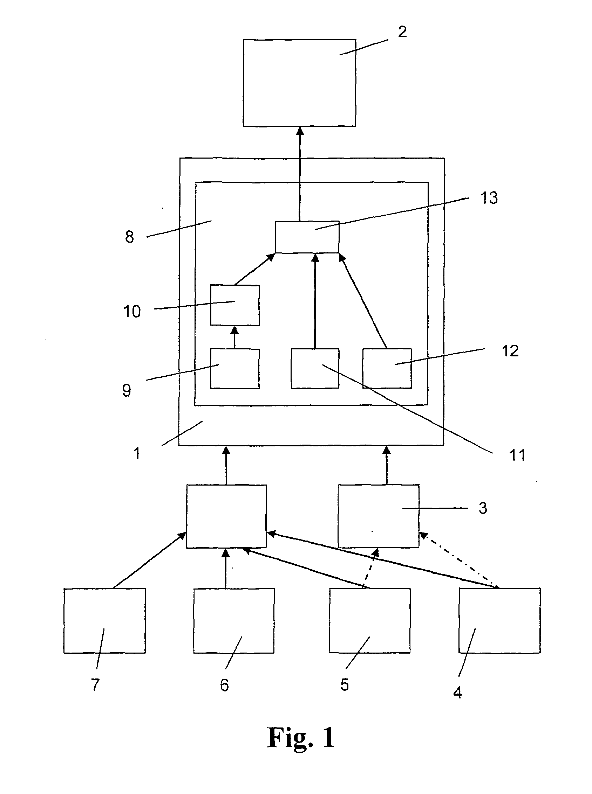

Figur 1 - Schaubild des Systems des Börsenhandels mit Anteilsscheinen von Anteilsfonds.

Erfindungsgemäß umfasst das System des Börsenhandels mit Anteilsscheinen von Investmentfonds (Bild 1) die Prozessoreinheit 1, die über Leitungen mit der Text- und Grafikanzeigeeinheit 2 und der Dateneingabeeinrichtung 3 verbunden ist. Die Text- und Grafikanzeigeeinheit ist als Display bzw. Laufschrift ausgeführt.

Prozessoreinheit, Text- und Grafikanzeigeeinheit und Dateneingabeeinrichtung(en) bilden die bekannten Komponenten eines jeden computergestützten Systems.

Die Prozessoreinheit ist mit der entsprechenden Software versehen.

Das System beinhaltet ebenfalls eine Datenbank 4 über die Anzahl der Anteilsscheine, aus denen jeder am Börsenhandel beteiligte Anteilsfond besteht, eine Datenbank 5 über die Restbestände auf den Verrechnungskonten, eine Datenbank 6 über die Restbestände an Geldmitteln auf den Handelskonten und eine Datenbank 7 über die Anzahl an Wertpapieren, aus denen das Vermögen jedes der genannten Fonds besteht. Die Prozessoreinheit ist über die Eingabeeinrichtung(en) 3 mit den genannten Datenbanken 4-7 verbunden und schließt die Einheit 8 zur Ermittlung des Wertes des Anteilsscheins ein, die mit der Einheit 2 zur Anzeige des Zahlenäquivalents des Wertes dieses Anteils für jeden Anteilsfonds auf dem Display oder in der Laufschrift verbunden ist. Die Einheit 8 zur Ermittlung des Wertes des Anteils in Echtzeit umfasst die Einheit 9, die die Anzahl der zum Vermögen des Fonds gehörenden Wertpapiere mit dem Verrechnungspreis dieser Wertpapiere multipliziert, die Einheit 10, die die Ergebnisse der Multiplikation der Anzahl der zum Fondsvermögen gehörenden Wertpapiere mit dem Verrechnungspreis dieser Papiere durch die Anzahl der zum Vermögen des Fonds gehörenden Fondsanteile dividiert, die Einheit 11 zur Division der Restbestände der Handelskonten des relevanten Anteilfonds durch die Anzahl der Anteilsscheine diese Fonds, die Einheit 12 zur Division der Verrechnungskonten des relevanten Anteilfonds durch die Anzahl der Anteilsscheine dieses Fonds sowie die Einheit 13, die die Ergebnisse der Division des Ergebnisses der Multiplikation der Anzahl der zum Fondsvermögen gehörenden Wertpapiere und die Ergebnisse aus der Divisions-Einheit addiert.

Die Einheit zur Ermittlung des Wertes eines Anteilsscheins ist mit einer Funktion zur Ermittlung des Wertes eines Anteils in Echtzeit mittels der genannten Software und einer Funktion zur Anzeige des zahlenmäßigen Äquivalents des Wertes dieses Anteilsscheins für jeden Anteilsfond auf dem Display oder in Laufschrift in Form des Indexes des Preises des Anteilsscheins versehen, der durch Division der Summe aus dem Ergebnis der Multiplikation der Anzahl der zum Fondsvermögen gehörenden Wertpapiere mit dem Verrechnungspreis dieser Wertpapiere und aus den Restbeständen an Geldmitteln auf den Handels- und Verrechnungskonten des entsprechenden Anteilsfonds durch die Anzahl der Fondsanteile ermittelt wird.

Ein Beispiel zur Ermittlung des Wertes eines Anteils sieht folgendermaßen aus:

    1. Vor Börsenbeginn an der Wertpapierbörse gehen von der Fondsverwaltungsgesellschaft folgende Informationen ein:

a) Auszug über die Anzahl der Anteile, aus denen der Fonds besteht;
b) Auszug über die Restbestände auf den Verrechnungskonten des Investmentfonds.
Diese Angaben ändern sich im Verlauf des Tages nicht. Alle Änderungen der Anzahl der Anteilsscheine durch Rückzahlung oder Verkauf von Anteilsscheine erfolgen nach Börsenschluss.

2. Die Börse verfügt in Echtzeit über Informationen über die Anzahl der Wertpapiere und die Restbestände an Geldmitteln auf den Handelskonten, aus denen das Fondsvermögen besteht.

3. Als Verrechnungspreis, auf dessen Grundlage der Wert des Wertpapiers ermittelt wird, wird der Preis des letzten Geschäfts angenommen. Gab es im Verlauf des Tages keine Geschäfte mit diesem Wertpapier, wird der Schlusspreis des Vortages verwendet.

4. Die Ermittlung des Wertes der reinen Aktiva des Anteilsfonds erfolgt dadurch, dass die Ergebnisse der Multiplikation der Anzahl der Wertpapiere mit dem Verrechnungspreis und die Restbestände auf dem Handels- und Verrechnungskonto addiert werden.

5. Der Wert des Vermögens des Anteilsfonds, der auf einen Anteil entfällt, wird ermittelt, indem der Wert der reinen Aktiva durch die Anzahl der Anteile dividiert wird.

Die Informationen werden aktualisiert, sofern Geschäfte mit den Aktiva des Fonds vorgenommen werden bzw. sich der Preis des letzten Geschäfts mit den zum Investmentportfolio des Anteilsfonds gehörenden Wertpapieren des Emittenten ändert. Diese Größe als Preisindex eines Anteilsscheins wird an der Börse mit den gleichen Verfahren wie auch die Börsenindizes umgerechnet.

Der Index des Preises (des Wertes) eines Anteilsscheins $I_t$ wird zur errechneten Zeit als Verhältnis des Gesamtmarktwertes $S_t$ der reinen Aktiva des Anteilsfonds in Echtzeit zur Anzahl der Anteile $N_t$ folgendermaßen errechnet: $I_t = S_t/N_t$,
wobei:

$$S_t = \sum_{i=0}^{N} P_i * Q_i + M_b + M_r$$

wobei:

$Q_i$ -  Anzahl der Wertpapiere des i-ten Titels, die dem Anteilsfonds derzeit gehören;
$P_i$ -  Preis des i-ten Wertpapiers zur berechneten Zeit;
$M_b$ -  Restbestand an Geldmitteln des Anteilsfonds auf dem Handelskonto im Handelssystem der Wertpapierbörse;

$M_r$ -  Gesamtrestbestände an Geldmitteln des Anteilsfonds auf seinen Verrechnungskonten, die um die Höhe der Verbindlichkeiten und Forderungen korrigiert wurden;
$N$ -  Anzahl der Titel der Wertpapiere im Investmentportfolio des Anteilsfonds.

Sind während des aktuellen Börsentags Geschäfte mit diesen Wertpapieren getätigt worden, wird als $P_i$ für das i-te Wertpapier der Preis des letzten Geschäfts angenommen. Sofern keine Geschäfte mit diesen Wertpapieren während des Börsentags getätigt wurden, wird als $P_i$ für das i-te Wertpapier der Schlusspreis des Vortages verwendet.

Der Markt der gemeinschaftlichen Investitionen in Russland weist in den letzten Jahren eine hohe Wachstumsdynamik auf. Die Anteilseigner konnten jedoch erst nach Ende des Börsentags Informationen über den Wert der reinen Aktiva und des Anteilsscheins erhalten. Die vorliegende Erfindung ermöglicht es, die Preise der Anteilsscheine transparenter zu bilden: Der Preisindikator für den Anteilsschein ermöglicht es den Investoren, während eines Börsentags seine Dynamik zu verfolgen und operativ Kauf- oder Verkaufsentscheidungen für die Anteilsscheine zu treffen. Die Berechnung dieses Indikators wird dazu beitragen, den sekundären Markt dieser Instrumente populärer zu machen und dessen Liquidität zu erhöhen.

Die vorliegende Erfindung ist gewerblich anwendbar, da sie unter Einsatz von umfassend genutzten computergestützten Systemen realisiert werden kann.

**Patentansprüche**

1.  System des Börsenhandels mit Anteilsscheinen von Investmentfonds, das eine Prozessoreinheit umfasst, die über Leitungen mit der Text- und Grafikanzeigeeinheit und der Dateneingabeeinrichtung verbunden ist, **dadurch gekennzeichnet, dass** das System zusätzlich eine Datenbank über die Anzahl der Anteilsscheine, aus denen jeder am Börsenhandel beteiligte Investmentfonds besteht, eine Datenbank über die Restbestände auf den Verrechnungskonten, eine Datenbank über die Restbestände an Geldmitteln auf den Handelskonten und eine Datenbank über die Anzahl der Wertpapiere, aus denen des Vermögen eines jeden genannten Fonds besteht, umfasst, wobei die Prozessoreinheit über die Eingabeeinrichtung mit den genannten Datenbanken verbunden ist und eine Einheit zur Ermittlung des Wertes des Anteilsscheins umfasst, die mit der Einheit zur Anzeige des zahlenmäßigen Äquivalents für den Wert dieses Anteilsscheins für jeden Anteilsfonds auf dem Display oder in einer Laufschrift verbunden ist, wobei die Einheit zur Ermittlung des Wertes des Anteilsscheins in Echtzeit in Form des Preisindexes des Anteilsscheins umfasst: eine Einheit, die die Anzahl der zum Fondsvermögen gehörenden Wertpapiere mit dem Verrechnungspreis dieser Papiere multipliziert, eine Einheit, die das erzielte Ergebnis der Multiplikation der Anzahl der zum Fondsvermögen gehörenden Wertpapiere mit dem Verrechnungspreis dieser Papiere durch die Anzahl der Fondsanteile dividiert, Einheiten, die die Geldrestbestände auf den Handels- und Verrechnungskonten des entsprechenden Anteilsfonds durch die Anzahl der Anteile dieses Fonds dividieren, sowie eine Einheit, die alle Ergebnisse der Division addiert und die mit einer Funktion zur Ermittlung des Wertes eines Anteilsscheins in Echtzeit in Form des Indexes des Preises des Anteilsscheins, der **dadurch** gebildet wird, dass die Summe aus den Ergebnissen der Multiplikation der Anzahl der zum Fondsvermögen gehörenden Wertpapiere mit dem Verrechnungspreis dieser Papiere und aus den Restbeständen auf den Handels- und Verrechnungskonten des entsprechenden Anteilsfonds durch die Anzahl der Anteile dieses Fonds dividiert wird, ausgestattet ist.

**Fig. 1**

## INTERNATIONAL SEARCH REPORT

International application No.

PCT/RU 2008/000144

| A. CLASSIFICATION OF SUBJECT MATTER | |
|---|---|
| | *G06Q 30/00* *(2006.01)* *G06Q 40/00* *(2006.01)* |

According to International Patent Classification (IPC) or to both national classification and IPC

**B. FIELDS SEARCHED**

Minimum documentation searched (classification system followed by classification symbols)

G06Q 10/00-90/00, G06F 17/00-17/40, G07F 19/00

Documentation searched other than minimum documentation to the extent that such documents are included in the fields searched

Electronic data base consulted during the international search (name of data base and, where practicable, search terms used)

PAJ, Esp@cenet, DWPI, PCT Online, USPTO DB, CIPO (Canada PO), SIPO DB, http://www.fips.ru

**C. DOCUMENTS CONSIDERED TO BE RELEVANT**

| Category* | Citation of document, with indication, where appropriate, of the relevant passages | Relevant to claim No. |
|---|---|---|
| X | RU 55170 U1 (OBSCHESTVO S OGRANICHENNOY OTVETSTVENNOSTYU "INVESTITSIONNAYA FINANSOVAYA GRUPPA "GLENIK-M") 27.07.2006, the claims | 1 |
| A | RU 2125292 C1 (TOMSON TRAIDING SERVICES, INC.) 20.01.1999 | 1 |
| A | WO 2006/133501 A1 (SHARECOVER SERVICES PTY LIMITED) 21.12.2006 | 1 |
| A | US 2006/0218075 A1 (VICTOR D. FELDMAN et al.) 28.09.2006 | 1 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 November 2008 (25.11.2008) | 04 December 2008 (04.12.2008) |

| Name and mailing address of the ISA/ **RU** | Authorized officer |
|---|---|
| Facsimile No. | Telephone No. |

Form PCT/ISA/210 (second sheet) (July 1998)

7

**IN DER BESCHREIBUNG AUFGEFÜHRTE DOKUMENTE**

**In der Beschreibung aufgeführte Patentdokumente**

- RU 2187149